(19) **Europäisches Patentamt / European Patent Office / Office européen des brevets**

(11) **EP 3 298 685 B2**

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**12.04.2023 Patentblatt 2023/15**

(45) Hinweis auf die Patenterteilung:
**12.08.2020 Patentblatt 2020/33**

(21) Anmeldenummer: **16721745.4**

(22) Anmeldetag: **27.04.2016**

(51) Internationale Patentklassifikation (IPC):
**H02P 1/46** (2006.01)   **H02P 9/06** (2006.01)

(52) Gemeinsame Patentklassifikation (CPC):
**H02P 1/46; H02P 9/06**

(86) Internationale Anmeldenummer:
**PCT/EP2016/059387**

(87) Internationale Veröffentlichungsnummer:
**WO 2016/184651 (24.11.2016 Gazette 2016/47)**

(54) **DREHZAHLÄNDERBARES ANTRIEBSSYSTEM UND VERFAHREN ZUM AUFSTARTEN UND/ODER BETREIBEN EINES DREHZAHLÄNDERBAREN ANTRIEBSSYSTEMS**

VARIABLE SPEED DRIVE SYSTEM AND METHOD FOR STARTING AND/OR OPERATING A VARIABLE SPEED DRIVE SYSTEM

SYSTÈME D'ENTRAÎNEMENT À VITESSE DE ROTATION VARIABLE ET PROCÉDÉ DE DÉMARRAGE ET/OU DE FONCTIONNEMENT D'UN SYSTÈME D'ENTRAÎNEMENT À VITESSE DE ROTATION VARIABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.05.2015 DE 102015107934**

(43) Veröffentlichungstag der Anmeldung:
**28.03.2018 Patentblatt 2018/13**

(73) Patentinhaber: **Voith Patent GmbH**
**89522 Heidenheim (DE)**

(72) Erfinder:
• **LAUTER, Bernd**
**89567 Sontheim an der Brenz (DE)**
• **LINDENMAIER, Jochen**
**89542 Herbrechtingen (DE)**

• **KNEER, Sven**
**89604 Allmendingen (DE)**

(74) Vertreter: **Meyer, Florian Alexander Marius et al**
**Meissner Bolte**
**Patentanwälte Rechtsanwälte**
**Partnerschaft mbB**
**Widenmayerstraße 47**
**80538 München (DE)**

(56) Entgegenhaltungen:
| | |
|---|---|
| WO-A1-2013/149639 | WO-A1-2013/149639 |
| WO-A1-2014/183139 | WO-A1-2014/183142 |
| WO-A1-2015/032491 | AT-B1- 511 720 |
| US-A1- 2012 286 512 | |

EP 3 298 685 B2

**Beschreibung**

Die vorliegende Erfindung betrifft ein drehzahländerbares Antriebssystem.

Drehzahlvariable Antriebssysteme werden in der industriellen Anwendung genutzt, um die zu übertragende Leistung besser an die jeweiligen Prozessanforderungen anzupassen. Insbesondere in Antriebssystemen von Verdichtern in der Öl- und Gasindustrie, aber auch bei Ventilatoren großer Leistung und beim Antrieb von Pumpen in thermischen Kraftwerken werden diese drehzahlvariabel ausgeführt.

Beispielsweise ist aus der Druckschrift WO 2014/169302 A1 ein Antriebssystem bekannt, welches einen drehzahlkonstanten elektrischen Hauptantrieb aufweist, des Weiteren einen Rotor als Abtrieb, ein Hauptgetriebe, welches den An- und Abtrieb miteinander koppelt, und einen drehzahlregelbaren Antrieb, welcher ebenfalls mit dem Hauptgetriebe gekoppelt ist. Mittels des drehzahlregelbaren Antriebs kann der elektrische Hauptantrieb aufgestartet bzw. hochgelaufen werden. Der drehzahlregelbare Antrieb ist mit einem Frequenzumrichter verbunden, welcher zum Aufstarten auf den Hauptantrieb geschaltet werden kann. Sobald die Nenndrehzahl des elektrischen Hauptantriebs erreicht ist, wird der elektrische Hauptantrieb auf Netzbetrieb umgeschaltet und der drehzahlregelbare Antrieb wird zur Anpassung der Abtriebsdrehzahl auf den Frequenzumrichter geschaltet. Ferner ist aus der Druckschrift WO 2011/000008 A1 ein Differenzialsystem bekannt. Das Differenzialsystem besteht dabei aus einer Differenzialstufe, einer Anpassungs-Getriebestufe und einem Differenzialantrieb. Ein Rotor treibt ein Hauptgetriebe an, welches mittels der Differenzialstufe mit einem Synchrongenerator gekoppelt ist. Der Differenzialantrieb ist über einen Frequenzumrichter und einen Transformator an ein elektrisches Versorgungsnetz angeschlossen. Ebenso offenbart die Druckschrift WO 2011/000008 A1 einen Schalter, der durch Öffnen den Synchrongenerator einfach vom elektrischen Versorgungsnetz trennt.

Nachteilig bei den aus der WO 2014/169302 A1 und WO 2011/000008 A1 bekannten Lösungen ist insbesondere der Verschleiß des Hauptgetriebes, welches den Antrieb mit dem Abtrieb koppelt, wobei dieser Verschleiß durch den Eingriff des drehzahlregelbaren Antriebs bzw. Differenzialantriebs hervorgerufen wird. Weiterhin nachteilig ist, dass während des Aufstartens des Hauptantriebs der drehzahlregelbare Antrieb bzw. der Differenzialantrieb nicht steuerbar ist und mechanisch gebremst oder gekuppelt werden muss. Ein weiterer Nachteil liegt darin, dass die Umschaltung zwischen dem drehzahlregelbaren Antrieb bzw. dem Differenzialantrieb und dem Hauptantrieb nicht zugkraftunterbrechungsfrei ist.

Vor dem Hintergrund dieser Problemstellung ist es eine Aufgabe der vorliegenden Erfindung, ein drehzahländerbares Antriebssystem der eingangs genannten Art anzugeben, bei dem der im Hauptgetriebe auftretende Verschleiß so gering wie möglich gehalten wird, dass während des Aufstartens des Hauptantriebs der drehzahlregelbare Antrieb bzw. der Differenzialantrieb steuerbar ist und bei dem insbesondere die Umschaltung zwischen drehzahlregelbarem Antrieb bzw. dem Differenzialantrieb einerseits und dem Hauptantrieb andererseits zugkraftunterbrechungsfrei ist. Ferner besteht die Aufgabe der vorliegenden Erfindung darin, ein Verfahren zum Aufstarten und/oder Betreiben eines solchen drehzahlvariablen Antriebssystems anzugeben.

Diese Aufgaben werden durch die Gegenstände der unabhängigen Patentansprüche 1, 6 und 7 gelöst, wobei vorteilhafte Weiterbildungen der erfindungsgemäßen Lösung in den Unteransprüchen angegeben sind.

Die Vorteile der erfindungsgemäßen Lösung liegen insbesondere darin, dass der im Hauptgetriebe auftretende Verschleiß so gering wie möglich gehalten wird, dass während des Aufstartens des Hauptantriebs der drehzahlregelbare Antrieb bzw. der Differenzialantrieb steuerbar ist, und dass insbesondere die Umschaltung zwischen drehzahlregelbarem Antrieb bzw. dem Differenzialantrieb und dem Hauptantrieb zugkraftunterbrechungsfrei ist.

Hierdurch lässt sich ein drehzahlvariabler Leistungsüberträger und gleichzeitig eine sanfte Antriebsmotor-Starteinrichtung realisieren, die in einem sehr weiten Drehzahlregelbereich hohe Wirkungsgrade erzielt und dabei die vorhandenen mechanischen und elektrischen Komponenten optimal und wirtschaftlich für den Normalbetrieb und Startvorgang nutzt. Dieses drehzahlvariable Getriebe mit elektrischer Leistungsüberlagerung, vorgesehen für die industrielle Anwendung im bevorzugten Leistungsbereich zwischen 500 KW und 100 MW, erreicht eine sehr gute Verfügbarkeit für die zuverlässigen Getriebekomponenten und elektrischen Komponenten aus dem Nieder- und Mittelspannungsbereich und erlaubt ein energie-effizientes Anfahren der verwendeten Antriebsmaschine.

Die erfindungsgemäße Lösung besitzt insbesondere einen großen Vorteil in Anwendungen, in denen eine Drehzahlübersetzung hin zu größeren Drehzahlen zwischen Antriebs- und Abtriebsmaschine notwendig ist. Des Weiteren ist es besonders vorteilhaft, wenn die Drehzahlregelung der Abtriebsmaschine nicht im gesamten Drehzahlbereich (sondern z.B. 60-100% oder 80-100%) realisiert werden muss. Unter diesen Voraussetzungen besitzt das drehzahlvariable Antriebssystem eine besonders vorteilhafte und wirtschaftliche Ausprägung.

Insbesondere ist bei vorteilhaften Realisierungen der erfindungsgemäßen Lösung vorgesehen, dass die mindestens zwei Frequenzumrichter mittels der Umschaltvorrichtung mit der Antriebsmaschine elektrisch verbunden oder verbindbar sind, derart, dass die Verbindung der Antriebsmaschine mit dem wenigstens einen elektrischen Versorgungsnetz zumindest temporär oder dauerhaft trennbar ist, um eine geregelte und/oder gesteuerte Drehzahländerung an der Antriebsmaschine zu erzeugen. Mit anderen Worten, im Unterschied zu den aus dem Stand der Technik bekannten und vorstehend erläuterten Lösungen, kann bei dem erfindungsgemäßen drehzahlvariablen Antriebssystem eine höhere Nennleistung für die Ansteuerung der Antriebsmaschine zur Verfügung gestellt werden, beispielsweise durch eine Parallelschaltung von mindestens zwei Frequenzumrichtern. Des Weiteren erlaubt diese Ausführungsform einen symmetrischen Eingriff der mindestens zwei Regelmaschinen auf die Getriebeeinheit und erlaubt dadurch eine einfachere Ausführung der betroffenen Gleitlagerung für den Normalbetrieb. Der dauerhafte symmetrische Eingriff über mindestens zwei drehzahlregelbare Antriebe wirkt sich hierbei positiv auf die Kosten und Verfügbarkeit des drehzahlvariablen Antriebssystems aus.

Bei einer nicht erfindungsgemäßen Ausführungsform eines drehzahländerbaren Antriebssystems weist die Umschaltvorrichtung mindestens drei Schaltvorrichtungen auf, welche ausgebildet sind, den wenigstens einen Frequenzumrichter mit einer der mindestens zwei Regelmaschinen und/oder der Antriebsmaschine und/oder die Antriebsmaschine mit wenigstens einem der elektrischen Versorgungsnetze elektrisch zu verbinden oder zu trennen. Demnach kommt bei dieser Ausführungsform für das drehzahlvariable Antriebssystem eine Umschaltvorrichtung zum Einsatz, welche einerseits die bereits genannten Vorteile ebenfalls erfüllen. Andererseits kann aber auch die Aufteilung der erforderlichen Regelleistungen zwischen den elektrischen Regelmaschinen und deren zugeordneten Frequenzumrichtern für unterschiedliche Lastkennlinien der Arbeitsmaschine vorgenommen und optimiert werden. Durch die mindestens drei Schaltvorrichtungen bietet sich für die Schaltung die Möglichkeit einer energieoptimalen Lastbeaufschlagung auf eine oder mehrere elektrische Regelmaschinen, die zu einer Erhöhung des Gesamtwirkungsgrads des drehzahlvariablen Antriebssystems führt.

Erfindungsgemäß weist die Umschaltvorrichtung mindestens fünf Schaltvorrichtungen auf, welche ausgebildet sind, die mindestens zwei Frequenzumrichter mit jeweils den mindestens zwei Regelmaschinen und/oder der Antriebsmaschine und/oder die Antriebsmaschine mit wenigstens einem der elektrischen Versorgungsnetze elektrisch zu verbinden oder zu trennen; und/oder wobei die Umschaltvorrichtung mindestens zwei Koppelelemente aufweist, welche ausgebildet sind, die mindestens zwei Frequenzumrichter elektrisch zu koppeln. Diese Weiterbildung erfüllt ebenfalls alle Vorteile der vorgenannten Ausführungsform. Ferner kann durch die mindestens fünf Schaltvorrichtungen die energieoptimale Lastbeaufschlagung auf mehrere elektrische Regelmaschinen noch weiter optimiert werden, wodurch der Gesamtwirkungsgrad des drehzahlvariablen Antriebssystems, im Vergleich zum vorgenannten Ausführungsbeispiels, noch weiter erhöht wird. Indem die Umschaltvorrichtung mindestens zwei Koppelelemente aufweist, kann die zeitliche Steuerung und/oder Regelung der mindestens zwei Frequenzumrichter noch weiter verbessert werden.

Zusätzlich ist es auch denkbar, dass das drehzahlvariable Antriebssystem eine Ansteuervorrichtung aufweist, welche ausgebildet ist, die Abtriebsmaschine mittels einer Bypassvorrichtung in einen Zustand mit reduzierter Last zu versetzen. Beispielsweise bei drehzahlvariablen Antriebssystemen für Kompressoren und Pumpen kann eine sogenannte Bypassvorrichtung oder Entlastungsleitung eingesetzt werden. Das Medium wird dazu über eine Leitung, die eine Verbindung zwischen Saug- und Druckseite des Kompressors/der Pumpe herstellt und von der Druckseite zurück zur Saugseite geführt. Die Verbindung kann z.B. über gestuft regelbare oder Schwarz/Weiß-Ventile erfolgen. Die Rückführung des Mediums kann vorzugsweise über einen Wärmetauscher oder Kühler erfolgen. Die Kapazität und daraus folgend die Leistungsaufnahme des Kompressors bzw. der Pumpe kann durch diese Maßnahme variiert werden. In mehrstufigen Kompressoren kann die Bypassvorrichtung auch zwischen einzelnen Stufen erfolgen. Für diese Aufgabe können bei Kompressoren auch sogenannte Anti-Surge-Ventile verwendet werden, die im Normalbetrieb einen unerwünschten, rückwärtsgerichteten Medienfluss von der Druck- zur Saugseite verhindern. Während des Aufstartvorgangs des drehzahlvariablen Antriebssystems wird das komprimierte Medium mit diesen Ventilen zurück zur Saugseite geführt. Durch zusätzliche Absperrventile auf der Saugzuleitung und/oder Druckabgangsleitung wird ein rückwärtsgerichteter Medienfluss, z.B. innerhalb der Pipeline, verhindert. Ebenfalls während des Aufstartvorgangs des drehzahlvariablen Antriebssystems kann eine Steuereinheit, welche das drehzahlvariable Antriebssystem aufweisen kann, einer Entlastungseinrichtung, die mit der Abtriebsmaschine gekoppelt sein kann, signalisieren, die Bypassvorrichtung zwischen Druck- und Saugseite anzusteuern und den rückwärtsgerichteten Medienfluss zu unterbinden. Die dadurch entstehende Reduzierung der Lastkennlinie an der Arbeitsmaschine ermöglicht das Aufstarten der Antriebsmaschine auf Nenndrehzahl mit einer reduzierten elektrischen Regelleistung über die mindestens zwei Frequenzumrichter.

In einer weiteren bevorzugten Ausführungsform ist die mechanische Kopplung der Antriebsmaschine und der Getriebeeinheit mittels eines Kupplungselements, insbesondere mittels eines mechanischen oder hydrodynamischen Kupplungselements, trennbar. Während des Aufstartvorgangs der Antriebsmaschine führt dies zu einer deutlichen Reduzierung des Lastmoments, das bisher der Antriebsmaschine über die Abtriebsmaschine eingeprägt wurde. Die Reduzierung des Lastmoments während des Aufstartvorgangs erlaubt eine optimale Auslegung der bereitgestellten Nennregelleistung der elektrischen Regelmaschinen und der mindestens zwei Frequenzumrichtern, insbesondere bei ungünstigen Lastkennlinien (konstantes Drehmoment oder lineares Lastmoment über die Drehzahl) der Abtriebsmaschine oder Anwendungen, die nur einen sehr geringen Drehzahlregelbereich der Abtriebsmaschine benötigen.

Weiterhin bevorzugt sind die jeweiligen mechanischen Kopplungen der mindestens zwei Regelmaschinen und der Getriebeeinheit mittels jeweils eines Kupplungselements, insbesondere mittels eines mechanischen oder hydrodynamischen Kupplungselements, trennbar. Wie schon in der vorgenannten Ausführungsform kann auch hier eine deutliche Reduzierung des Lastmoments der Antriebsmaschine erzeugt werden.

Gemäß einer alternativen Realisierung der Umschaltvorrichtung ist vorgesehen, dass sie einen Transformator aufweist. Durch die Zwischenschaltung eines Transformators können so vorhandene Spannungsdifferenzen zwischen dem elektrischen Versorgungsnetz und den mindestens zwei Frequenzumrichtern entfallen bzw. ausgeglichen werden.

Verfahren zum Aufstarten und/oder Betreiben eines drehzahländerbaren Antriebssystems der eingangs beschriebenen Art sind in den Ansprüchen 6 und 7 definiert.

Für die beiden vorgenannten Verfahren gelten die gleichen Vorteile, wie sie bereits für das drehzahländerbare Antriebssystem und dessen vorzugsweise Ausführungsformen beschrieben wurden.

In einem weiteren bevorzugten Verfahren kann die Lastkennlinie der Abtriebsmaschine vordem Aufstartvorgang durch Ansteuerung mittels einer Bypassvorrichtung in einen Zustand mit reduzierter Last versetzen werden. Nach dem elektrisches Verbinden der Antriebsmaschine mit dem elektrischen Versorgungsnetz kann die Bypassvorrichtung die Entlastung aufhebt und zur ursprünglichen Lastkennlinie zurückschaltet. Die dadurch entstehende Reduzierung der Lastkennlinie an der Arbeitsmaschine ermöglicht das Aufstarten der Antriebsmaschine auf Nenndrehzahl mit einer reduzierten elektrischen Regelleistung über die mindestens zwei Frequenzumrichter.

Gemäß einem weiteren bevorzugten Verfahren kann eine mechanische Kopplung der Antriebsmaschine und einer Getriebeeinheit vor dem Aufstartvorgang durch Ansteuerung eines Kupplungselements getrennt werden. Nach dem elektrischen Verbinden der Antriebsmaschine mit dem elektrischen Versorgungsnetz kann diese mechanische Kopplung der Antriebsmaschine und der Getriebeeinheit durch Ansteuerung des Kupplungselements wieder verbunden werden. Während des Aufstartvorgangs der Antriebsmaschine führt dies zu einer deutlichen Reduzierung des Lastmoments, das bisher der Antriebsmaschine über die Abtriebsmaschine eingeprägt wurde. Die Reduzierung des Lastmoments während des Aufstartvorgangs erlaubt eine optimale Auslegung der bereitgestellten Nennregelleistung der elektrischen Regelmaschinen und der mindestens zwei Frequenzumrichtern, insbesondere bei ungünstigen Lastkennlinien (konstantes Drehmoment oder lineares Lastmoment über die Drehzahl) der Abtriebsmaschine oder Anwendungen, die nur einen sehr geringen Drehzahlregelbereich der Abtriebsmaschine benötigen.

Nachfolgend werden unter Bezugnahme auf die beiliegenden Zeichnungen zwei exemplarische Ausführungsformen eines drehzahländerbaren Antriebssystems beschrieben.

Es zeigen:

Fig. 1: eine schematische Darstellung einer erfindungsgemäßen Ausführungsform des drehzahländerbaren Antriebssystems;

Fig. 2: einen mechanischen Aufbau der Koppelung zweier Regelmaschinen 2.1, 2.2 mit einer Getriebeeinheit 17 und damit gekoppelt mit einer Antriebsmaschine 1 und einer Abtriebsmaschine 3 des Antriebssystems gemäß FIG. 1;

Fig. 3: einen elektrischen Schaltplan einer nicht erfindungsgemäßen Ausführungsform eines drehzahländerbaren Antriebssystems; und

Fig. 4: einen elektrischen Schaltplan der erfindungsgemäßen Ausführungsform des drehzahländerbaren Antriebssystems gemäß FIG. 1.

Es sind nur die für das unmittelbare Verständnis der Erfindung wesentlichen Elemente gezeigt.

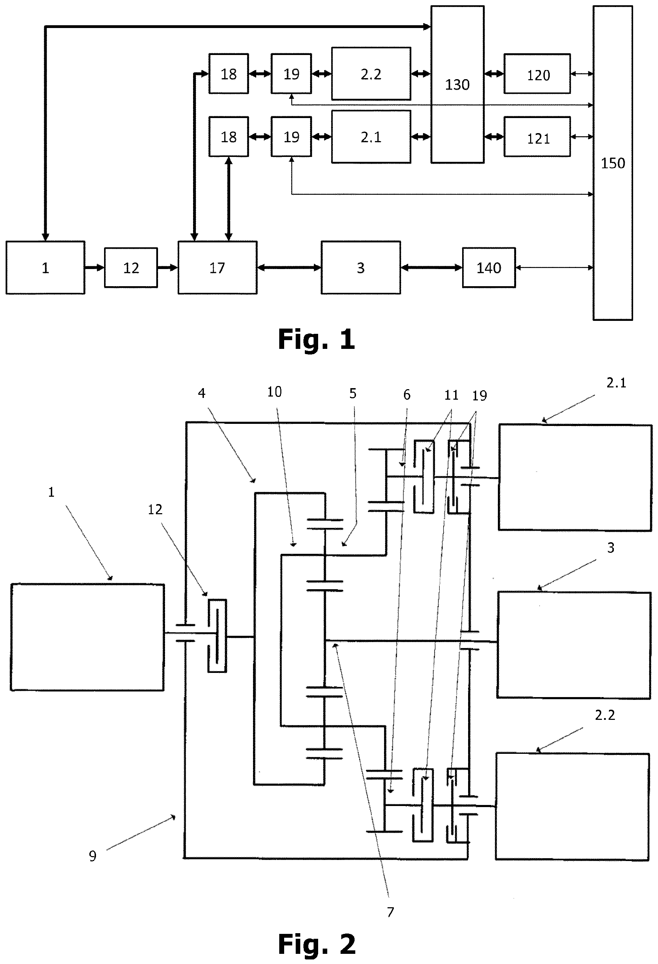

Die in Fig. 1 gezeigte schematische Darstellung eines drehzahländerbaren Antriebssystems weist eine Getriebeeinheit 17 mit einer zentralen Eingangswelle an einer Antriebsmaschine 1, vorzugsweise einer elektrischen Induktionsmaschine, und mit einer zentralen Ausgangswelle an einer Abtriebsmaschine 3 auf.

Die Getriebeeinheit 17 ist vorzugsweise als Planetengetriebe ausgeführt, welches ein Sonnenrad 7, einen Planetenträger 10 mit Planetenrädern 5 (im Folgenden auch kurz als "Planeten" bezeichnet) und ein Hohlrad 4 aufweist. Damit wird eine Koaxialität zwischen Eingangs- (Antriebs-) und Ausgangs- (Abtriebs-) Welle realisiert.

Über jeweilige Getriebestufen 18 eines Nebenzweigs sind zwei Regelmaschinen 2.1, 2.2 mit der Getriebeeinheit 17 gekoppelt und können so Leistung in die Antriebsmaschine 1 einspeisen. Vorzugsweise handelt es sich bei den beiden Regelmaschinen 2.1, 2.2 um unabhängige drehzahlregelbare E-Motoren.

Die Anbindung der An- und Abtriebswelle an das Planetengetriebe kann auf unterschiedliche Art erfolgen; dadurch unterscheiden sich die unterschiedlichen Arten von Überlagerungsgetrieben.

Die Planeten 5 im Planetengetriebe bietet eine Kopplungsmöglichkeit für einen Überlagerungszweig. Folgende Formen von Planetengetrieben sind denkbar:

| Form | Antrieb | Abtrieb | Überlagerung |
|------|---------|---------|--------------|
| A | Hohlrad 4 | Planententräger 10 | Sonnenrad 7 |

(fortgesetzt)

| Form | Antrieb | Abtrieb | Überlagerung |
|------|---------|---------|--------------|
| B | Sonnenrad 7 | Planententräger 10 | Hohlrad 4 |
| C | Sonnenrad 7 | Hohlrad 4 | Planententräger 10 |
| D | Planententräger 10 | Hohlrad 4 | Sonnenrad 7 |
| E | Planententräger 10 | Sonnenrad 7 | Hohlrad 4 |
| F | Hohlrad 4 | Sonnenrad 7 | Planententräger 10 |

Die Wahl einer geeigneten Getriebevariante ist abhängig vom jeweiligen Anforderungsprofil der Arbeitsmaschine hinsichtlich Drehmoment und Drehzahl und verfügbarer, geeigneter Antriebsmaschinen 1 für die Leistungsüberlagerung.

Die beiden Regelmaschinen 2.1, 2.2 können mit einer jeweiligen Bremseinheit 19 abgebremst und/oder freigegeben werden. Die Bremseinheiten 19 sind in den Figuren 1 und 2 innerhalb des drehzahländerbaren Antriebssystems angeordnet. Eine alternative Ausführungsform wäre, die Bremseinheiten 19 außerhalb des drehzahländerbaren Antriebssystems anzuordnen. Ferner können die unabhängig regelbaren Regelmaschinen 2.1, 2.2 mittels geeigneter Trenneinrichtungen (Kupplungsvorrichtungen 11) in der jeweiligen Getriebestufe 18 von der Getriebeeinheit 17 abgekoppelt werden.

Indem die Regelmaschinen 2.1, 2.2 durch jeweilige Bremseinheiten 19 abgebremst und/oder freigegeben werden können, kann dies im Normalbetrieb genutzt werden, um die Drehzahl des Regelpfades auf 0 (null) rpm fest zu bremsen. Während des Startvorgangs können die Bremseinheiten 19 genutzt werden, um bei ungünstigen Aufteilungen der Massenträgheiten zwischen Antriebsmaschine 1, Regelmaschinen 2.1, 2.2 und Abtriebsmaschine 3 eine definierte Last an der jeweiligen Regelmaschine 2.1, 2.2 anzulegen, der eine definierte Aufteilung der Ein- und Ausgangsdrehzahlen der Getriebeeinheit 17 zur Folge hat.

Die Regelmaschinen 2.1, 2.2 sind im Normalbetrieb über eine Umschaltvorrichtung 130 mit jeweils einem Frequenzumrichter 120, 121 elektrisch verbunden. Die Regelmaschinen 2.1, 2.2 werden mittels der jeweiligen Frequenzumrichter 120, 121 im Normalbetrieb mit variierender Drehzahl betrieben.

Die für den Startvorgang und Normalbetrieb benötigten Steuer- und Regelbefehle werden durch die Steuereinheit 150 erzeugt. Die Steuereinheit ist als unabhängige Komponente ausgeführt. Sie kann jedoch auch integriert innerhalb mindestens einem der Frequenzumrichter 120, 121 oder innerhalb der Umschaltvorrichtung 130 angeordnet werden. Die Steuereinheit 150 erzeugt während des Startvorgangs nötige Ansteuerbefehle, liest vorzugsweise die umgesetzten Schaltzustände innerhalb der Umschaltvorrichtung 130 zurück und plausibilisiert die Schaltanforderungen und Schaltzustände gegeneinander und steuert oder regelt deren zeitliche Abläufe. Die Steuereinheit 150 weist zumindest Steuerzugriffe gegenüber den Frequenzumrichtern 120, 121, der Kupplungsvorrichtung 11 innerhalb der Getriebeeinheit 17, einer Entlastungseinrichtung 140 an der Abtriebsmaschine 3 und gegenüber den Bremseinheiten 19 auf.

Die Entlastungseinrichtung 140 an der Abtriebsmaschine 3 kann in Abhängigkeit der Ausführung der Abtriebsmaschine 3 als Inlet-Guide-Ventil (für Kompressoren oder Ventilatoren) oder als Bypassvorrichtung (für Pumpen) ausgeführt werden. Die Entlastungseinrichtung 140 vollführt eine Änderung der Lastkennlinie der Abtriebsmaschine 3 hin zu geringeren Lasten.

Ein Kupplungselement 12, welches zwischen der Antriebsmaschine 1 und der Getriebeeinheit 17 zwischengeschaltet ist, bietet die Möglichkeit, die mechanische Kopplung zwischen der elektrischen Antriebsmaschine 1 und dem Hohlrad 4, welches die Verbindung zur Getriebeeinheit 17 darstellt, zu unterbrechen. Während des Aufstartvorgangs der Antriebsmaschine 1 führt dies zu einer deutlichen Reduzierung des Lastmoments, das bisher der Antriebsmaschine 1 über die Abtriebsmaschine 3 eingeprägt wurde.

Die Reduzierung des Lastmoments während des Aufstartvorgangs erlaubt eine optimale Auslegung der bereitgestellten Nennregelleistung der elektrischen Regelmaschinen 2.1, 2.2 und der Frequenzumrichter 120, 121, insbesondere bei ungünstigen Lastkennlinien (konstantes Drehmoment oder lineares Lastmoment über die Drehzahl) der Abtriebsmaschine 3 oder bei Anwendungen, die nur einen sehr geringen Drehzahlregelbereich der Abtriebsmaschine 3 benötigen. Während des Aufstartvorgangs mit dem erfindungsgemäßen drehzahländerbaren Antriebssystem kommen die Bremseinrichtungen 19 nicht zum Einsatz und können somit ggf. entfallen.

Der in Fig. 2 dargestellte mechanische Aufbau zeigt die Verbindung der Antriebswelle (Antriebsmaschine 1) mit dem Hohlrad 4 des Planetengetriebes. Die Ausgangswelle an der Abtriebsmaschine 3 ist mit dem Sonnenrad 7 des Planetengetriebes verbunden. Die Planeten 5 sind im Planententräger 10 gelagert. Der Planententräger 10 wird über zwei Stirnradgetriebestufen 6 durch zwei drehzahlregelbare E-Motoren, die Regelmaschinen 2.1, 2.2, angetrieben. Die Kupplungen 11 dienen zur Trennung der elektrischen Regelmaschinen 2.1, 2.2 von den jeweiligen Stirnradgetriebestufen 6.

Durch die Bremseinrichtungen 19 wird ermöglicht, dass die Antriebswelle der Regelmaschinen 2.1, 2.2 direkt oder indirekt gegenüber einem Getriebegehäuse 9 festgesetzt oder freigegeben werden kann.

Die Getriebeübersetzung des Umlaufgetriebes $i_{0-UG} = \frac{z_{Ho-UG}}{z_{So-UG}} = \frac{n_{a-nenn} \times U_{pkt}}{n_e}$ ergibt sich aus der Anzahl der Zähne der Planetengetriebeverzahnung bzw. durch die Wahl des Umkehrpunktes und der erforderlichen Nennabtriebsdrehzahl und der Antriebsdrehzahl. Mit der Standardgetriebeübersetzung wird das Drehzahlverhältnis zwischen Planetenträger 10 und Rotordrehzahl der Regelmaschinen 2.1, 2.2 bestimmt.

Der Einsatz von mehreren elektrischen Regelmaschinen 2.1, 2.2 besitzt eine Reihe von Vorteilen für den Startvorgang der elektrischen Antriebsmaschine 1 und für den Normalbetrieb des drehzahländerbaren Antriebssystems. Eine symmetrische Anordnung des mechanischen Eingriffs über die Stirnradstufen 6 der elektrischen Regelmaschinen 2.1, 2.2 erlaubt eine optimale Krafteinleitung auf den Planetenträger 10 und dessen Lagerung kann kostengünstiger gestaltet werden. Des Weiteren bietet der Einsatz von mindestens zwei elektrischen Regelmaschinen 2.1, 2.2 die Möglichkeit einer funktionalen Redundanz mit einem ggf. eingeschränkten Drehzahl-Betriebsbereich.

Innerhalb des Startvorgangs erlauben zusätzliche Regelmaschinen 2.1, 2.2 einen Betriebszustand, in dem die eingeprägte Last durch die rotierende Abtriebsmaschine 3 reduziert werden kann. Durch eine aktiv eingeprägte Last.

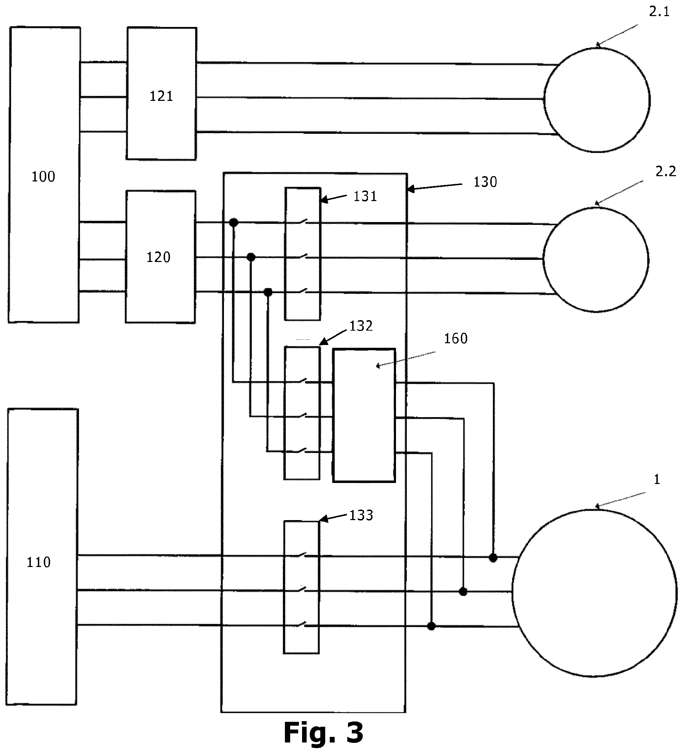

Der in Fig. 3 gezeigte elektrische Schaltplan bezieht sich auf eine nicht erfindungsgemäße Ausführungsform eines drehzahländerbaren Antriebssystems. Es weist das elektrische Versorgungsnetz 100, zwei Frequenzumrichter 120, 121 und deren zugeordnete elektrische Regelmaschinen 2.1, 2.2 auf. Das Spannungsniveau des elektrischen Versorgungsnetzes 100 richtet sich nach der geforderten Nennleistung der elektrischen Regelmaschinen 2.1, 2.2 und deren Anzahl und der benötigten Startleistung, die das drehzahländerbare Antriebssystem in der elektrischen Antriebsmaschine 1 während des Startvorgangs realisieren muss. Bevorzugte Bemessungsspannungen der Frequenzumrichter 120, 121 und der Regelmaschinen 2.1, 2.2 bewegen sich zwischen 400V bis 13,8KV. Ferner weist das drehzahländerbare Antriebssystem das elektrische Versorgungsnetz 110 auf, das über die Umschaltvorrichtung 130 mit der elektrischen Antriebsmaschine 1 gekoppelt oder koppelbar ist. Das benötigte Spannungsniveau des elektrischen Versorgungsnetzes 110 richtet sich nach der geforderten Nennleistung der elektrischen Antriebsmaschine 1 und den vorhandenen, verfügbaren Spannungsversorgungen 100, 110. Bevorzugte Bemessungsspannungen der elektrischen Antriebsmaschine 1 bewegen sich im Mittelspannungsbereich zwischen 1KV bis 50KV. Die zwei Frequenzumrichter 120, 121 dienen zur Variierung des Spannungsniveaus und der Frequenz aus dem elektrischen Versorgungsnetz 100. Der erste Frequenzumrichter 120 erlaubt in Abhängigkeit der Umschaltvorrichtung 130 den drehzahlgeregelten Betrieb der zweiten elektrischen Regelmaschine 2.2 oder der elektrischen Antriebsmaschine 1. Der zweite Frequenzumrichter 121 erlaubt den drehzahlgeregelten Betrieb der ersten elektrischen Regelmaschine 2.1. Die Umschaltvorrichtung 130 weist drei Schaltvorrichtungen 131, 132, 133 und die dazugehörigen elektrischen Verkabelungen und Anschlussmöglichkeiten auf. Die erste und dritte Schaltvorrichtung 131, 133 können in Abhängigkeit der Anwendung auch außerhalb der Umschaltvorrichtung 130 realisiert und bereitgestellt werden. Eine übergeordnete Ansteuerung und Verriegelung der einzelnen Schaltvorrichtungen 131, 132, 133 ist durch die Umschaltvorrichtung 130 und deren Steuereinheit 150 (in Fig. 3 nicht dargestellt) gewährleistet. Innerhalb der Umschaltvorrichtung 130 können Elemente (in den Zeichnungen nicht dargestellt) integriert werden, die dem Schutz von elektrischen Komponenten und Kabeln dienen und diese Bauteile vor Über- oder Unterschreitungen der zulässigen Schwellwerte in Strom und Spannung schützen.

Der elektrische Hochlauf der Antriebsmaschine 1 wird durch das drehzahländerbare Antriebssystem unter Verwendung der zwei Frequenzumrichter 120, 121, insbesondere als elektro-mechanische Anlaufunterstützung, und der beiden Regelmaschinen 120, 121 ermöglicht.

Im Folgenden wird ein nicht erfindungsgemäßes Verfahren zum Aufstarten und/oder Betreiben des drehzahländerbaren Antriebssystems beschrieben. Vor dem Startvorgang befinden sich die elektrische Antriebsmaschine 1, die Abtriebsmaschine 3 und die beiden elektrischen Regelmaschinen 2.1, 2.2 vorzugsweise bei einer Drehzahl nahe 0 (null) rpm oder deutlich unterhalb der Nenndrehzahl. Die Umschaltvorrichtung 130 stellt über die ersten drei Schaltvorrichtungen 131, 132, 133 vor dem Hochlauf bzw. dem Aufstarten folgende elektrischen Verbindungen her:

- Die erste Schaltvorrichtung 131 unterbricht die elektrische Verbindung zwischen dem ersten Frequenzumrichter 120 und der zweiten elektrischen Regelmaschine 2.2.
- Die zweite Schaltvorrichtung 132 unterbricht die elektrische Verbindung zwischen dem ersten Frequenzumrichter 120 und der elektrischen Antriebsmaschine 1.
- Die dritte Schaltvorrichtung 133 unterbricht die elektrische Verbindung zwischen dem ersten elektrischen Versorgungsnetz 110 und der elektrischen Antriebsmaschine 1.

Soll der Hochlauf der elektrischen Antriebsmaschine 1 durchgeführt werden, stellt die Umschaltvorrichtung 130 über die drei Schaltvorrichtungen 131, 132, 133 die folgenden elektrischen Verbindungen her:

- Die erste Schaltvorrichtung 131 unterbricht die elektrische Verbindung zwischen dem ersten Frequenzumrichter 120 und der zweiten elektrischen Regelmaschine 2.2.
- Die zweite Schaltvorrichtung 132 stellt die elektrische Verbindung zwischen dem ersten Frequenzumrichter 120 und der elektrischen Antriebsmaschine 1 her.
- Die dritte Schaltvorrichtung 133 unterbricht die elektrische Verbindung zwischen dem ersten elektrischen Versorgungsnetz 110 und der elektrischen Antriebsmaschine 1.

Die elektrische Verbindung zwischen dem ersten Frequenzumrichter 120 und der elektrischen Antriebsmaschine 1 erlaubt es, die Antriebsmaschine 1 mit einer variablen Frequenz und einer variablen Spannung zwischen 0 (null) Volt und der Bemessungsspannung des ersten Frequenzumrichters 120 und dessen elektrischen Versorgungsnetzes 100 mit einer variierenden Drehzahl zu betreiben.

Die Nennleistung des ersten Frequenzumrichters 120, die durch seine Nennspannung und seinen Nennstrom definiert werden, kann während des Startvorgangs für einen definierten Zeitbereich, der hauptsächlich durch die thermische Belastung der Leistungshalbleiter durch einen Stromfluß größer dem Nennstrom bestimmt wird, erhöht werden. Die Nennleistung des ersten Frequenzumrichters 120 wird durch die jeweilige Auslegung der Startvorrichtung bestimmt und beträgt vorzugsweise 10-40% der Gesamtabtriebsleistung. Sollte es auf Grund der Auslegung zu einer unterschiedlichen Bemessungsspannung der elektrischen Antriebsmaschine 1 mit der Bemessungsspannung $U_{NENN}$ und dem ersten Frequenzumrichter 120 mit der Bemessungsspannung $U_{VFD}$ kommen, sollte berücksichtigt werden, dass das maximale Drehmoment, welches beim Aufstarten der elektrischen Antriebsmaschine 1 erzeugt werden kann, mit steigender Drehzahl abnimmt. Das maximale Drehmoment, das bei der Nenndrehzahl der elektrischen Antriebsmaschine

$$\mathrm{M}_{start.max} = M_{nenn} \times \left(\frac{U_{VFD}}{U_{nenn}}\right)^2$$

1 erreicht werden kann, beträgt hierbei                                              . Die Anpassung der Bemessungsspannungen kann über einen Transformator 160 erfolgen. In diesem Fall entfällt die Einschränkung im maximal erreichbaren Drehmoment.

Die elektrische Antriebsmaschine 1 erhöht im weiteren Verlauf des Verfahrens ihre Drehzahl; die zweite elektrische Regelmaschine 2.2 wird nicht aktiv angesteuert, kann jedoch mittels der ersten elektrischen Regelmaschine 2.1 über deren zweiten Frequenzumrichter 121 variable Drehzahlen am Planetenträger 10 über die Stirnradgetriebestufe 6 einprägen. In Folge der mechanischen Kopplung zwischen der elektrischen Antriebsmaschine 1 über die Getriebeeinheit 17 zur Abtriebsmaschine 3 kommt es ebenfalls zu einer Drehzahlerhöhung an der Abtriebsmaschine 3. Diese Drehzahlerhöhung der Abtriebsmaschine 3 kann über die erste elektrische Regelmaschine 2.1 reduziert oder erhöht werden. Die Erhöhung oder Reduzierung entspricht dem Funktionsprinzip, welches im Normalbetrieb für die Variierung der Abtriebsdrehzahl genutzt wird. Während des Aufstartens der Antriebsmaschine 1 wird mittels der ersten drehzahlvariablen elektrischen Regelmaschine 2.1 die Abtriebsmaschine 3, für einen definierten Drehzahlbereich der Antriebsmaschine 1, bei Drehzahlen nahe 0 (null) rpm gehalten. Diese Maßnahme ermöglicht es, ein resultierendes Lastmoment, welches durch eine drehende Abtriebsmaschine 3 verursacht wird, zu reduzieren. Die mechanische Auslegung des drehzahländerbaren Antriebssystems, der ersten elektrischen Regelmaschine 2.1 und insbesondere der Getriebeeinheit 17 definiert dabei, in welchem Drehzahlbereich der Antriebsmaschine 1 die Drehzahl der Abtriebsmaschine 3 reduziert werden kann. Ebenso definiert sie, welche Drehzahl an der Abtriebsmaschine 3 eingeprägt wird, wenn die Antriebsmaschine 1 bei der Nenndrehzahl betrieben wird und die erste elektrische Regelmaschine 2.1 eine maximale Reduktion der Abtriebsdrehzahl einprägt. Innerhalb dieses Aufstartverfahrens kommt die Bremseinrichtung 19 nicht zum Einsatz und kann entfallen oder muss die Antriebswelle der beiden Regelmaschinen 2.1, 2.2 während des Startvorgangs freigeben.

In Abhängigkeit der Lastkennlinie (z.B. parabolisch, konstant, fallend oder steigend) der Abtriebsmaschine 3 und der Abtriebsdrehzahl werden unterschiedliche Lasten eingeprägt, die der erste Frequenzumrichter 120 über die Antriebsmaschine 1 überwindet, um die Abtriebsmaschine 3 auf Nenndrehzahl zu beschleunigen. Eine Anpassung der Lastkennlinie der Abtriebsmaschine 3 kann über die Steuereinheit 150 mittels Aktivierung einer Entlastungseinrichtung 140 bei Bedarf erreicht werden.

Die elektro-mechanische Anlaufunterstützung mittels des ersten Frequenzumrichters 121 und dessen zugeordnete zweite Regelmaschine 2.1 ermöglicht eine optimale Aufteilung der benötigten Gesamtregelleistung der beiden Frequenzumrichter 120, 121, so dass in Abhängigkeit der Lastkennlinie mehr Regelleistung für den ersten Frequenzumrichter 120 oder den zweiten Frequenzumrichter 121 bereitgestellt wird.

Nachdem die Antriebsmaschine 1 eine Drehzahl nahe der Nenndrehzahl (+/- 5%) erreicht hat, kann die Antriebsmaschine 1 ohne Probleme mit dem zweiten Versorgungsnetz 110 verbunden werden. In Abhängigkeit der Ausführung der Antriebsmaschine 1 muss die Differenzdrehzahl (Schlupf) und/oder der Phasenlage zwischen der Antriebsmaschine 1 und dem Versorgungsnetz 110 berücksichtigt werden. In diesem Fall prüft die Steuereinheit 150 diese Beziehungen und die Schaltvorrichtungen 131, 132, 133 der Umschaltvorrichtung 130 schalten nur dann, wenn die erforderlichen Bedingungen erfüllt sind.

Die Umschaltvorrichtung 130 stellt in diesem Fall über die drei Schaltvorrichtungen 131, 132, 133 die folgenden elektrischen Verbindungen her:

- Die erste Schaltvorrichtung 131 unterbricht die elektrische Verbindung zwischen dem ersten Frequenzumrichter 120 und der zweiten elektrischen Regelmaschine 2.2.
- Die zweite Schaltvorrichtung 132 unterbricht die elektrische Verbindung zwischen dem ersten Frequenzumrichter 120 und der elektrischen Antriebsmaschine 1.
- Die dritte Schaltvorrichtung 133 unterbricht die elektrische Verbindung zwischen dem ersten elektrischen Versorgungsnetzt 110 und der elektrischen Antriebsmaschine 1.

Nachdem sichergestellt wurde, dass keine weitere direkte oder indirekte Verbindung zwischen dem ersten elektrischen Versorgungsnetz 100 und der elektrischen Antriebsmaschine 1 vorliegt, stellt die Umschaltvorrichtung 130 die folgenden elektrischen Verbindungen her:

- Die erste Schaltvorrichtung 131 stellt die elektrische Verbindung zwischen dem ersten Frequenzumrichter 120 und der zweiten elektrischen Regelmaschine 2.2 her.
- Die zweite Schaltvorrichtung 132 unterbricht die elektrische Verbindung zwischen dem ersten Frequenzumrichter 120 und der elektrischen Antriebsmaschine 1.
- Die dritte Schaltvorrichtung 133 stellt die elektrische Verbindung zwischen dem zweiten elektrischen Versorgungsnetz 110 und der elektrischen Antriebsmaschine 1 her.

Dieser Schaltzustand der Umschaltvorrichtung 130 entspricht dem üblichen Schaltzustand im Normalbetrieb des drehzahländerbaren Antriebssystems und führt zu einem Betrieb der Antriebsmaschine 1 mit einer nahezu konstanten Drehzahl, die durch die Frequenz des zweiten elektrischen Versorgungsnetzes 110 und den Aufbau des Wicklungssystems der Antriebsmaschine 1 definiert wird. Während des Normalbetriebs kann die Bremseinrichtung 19 genutzt werden, um den Planetenträger 10 festzusetzen und damit eine konstante Drehzahl am sogenannten Umkehrpunkt einzustellen. Die Bremseinrichtung 19 kann auch dazu genutzt werden, die Antriebswelle der elektrischen Regelmaschinen 2.1, 2.2 freizugeben, um die Abtriebsdrehzahl der Abtriebsmaschine 3 über die Drehzahl der elektrischen Regelmaschinen 2.1, 2.2 zu beeinflussen.

Dazu wird die Bremseinrichtung 19 über die Steuereinheit 150 beeinflusst. Die Frequenzumrichter 120, 121 werden genutzt, um die jeweils zugeordneten elektrischen Regelmaschinen 2.1, 2.2 mit variierender Drehzahl zu betreiben und dadurch eine variierende Drehzahl an der Abtriebsmaschine 3 einzustellen.

Durch die Beeinflussung der Drehmomente und Drehzahlen der beiden Regelmaschinen 2.1, 2.2 kann die Drehmoment-Drehzahl-Charakteristik des gesamten Getriebes gestaltet werden. Durch den Einsatz von zwei elektrischen Regelmaschinen 2.1, 2.2 und Kupplungsvorrichtungen 11 kann die Drehmoment-Drehzahl-Charakteristik durch die elektrischen Regelmaschinen 2.1, 2.2 umgesetzt werden, wobei sich eine Flexibilität in der Aufteilung auf die einzelnen Regelmaschinen 2.1, 2.2 ergibt. Um den Wirkungsgrad und die Verfügbarkeit zu der Gesamtvorrichtung zu erhöhen, können einzelnen Regelmaschinen 2.1, 2.2 ohne Ansteuerung durch den jeweiligen Frequenzumrichter 120, 121 betrieben werden und/oder durch die zugehörigen Kupplungsvorrichtungen 11 von der Stirnradgetriebestufe 6 abgekoppelt werden.

Eine Wirkungsgraderhöhung kann dabei durch einen höheren Komponentenwirkungsgrad der elektrischen Regelmaschinen 2.1, 2.2 bei Betriebszuständen mit Leistungsanforderungen nahe der Nennleistung erzeugt werden. Des Weiteren können Schlepp- und Reibungsverluste durch eine Abkopplung mittels zugehöriger Kupplungsvorrichtungen 11 reduziert werden.

Die Erhöhung der Verfügbarkeit wird erreicht, indem durch die Umschaltvorrichtung 130 und die zugeordneten drei Schaltvorrichtungen 131, 132, 133 die elektrische Verbindung zwischen den Regelmaschinen 2.1, 2.2 und deren zugeordneten Frequenzumrichtern 120, 121 unterbrochen wird. Eine Rückwirkung von elektrischen Fehlzuständen, die in den elektrischen Regelmaschinen 2.1, 2.2 und/oder den jeweils zugeordneten Frequenzumrichtern 120, 121 auftreten, können dadurch unterdrückt werden.

Mechanische Fehler wie z.B. Blockieren an den elektrischen Regelmaschinen 2.1, 2.2 können durch eine Abkopplung mittels zugehöriger Kupplungsvorrichtungen 11 erreicht werden.

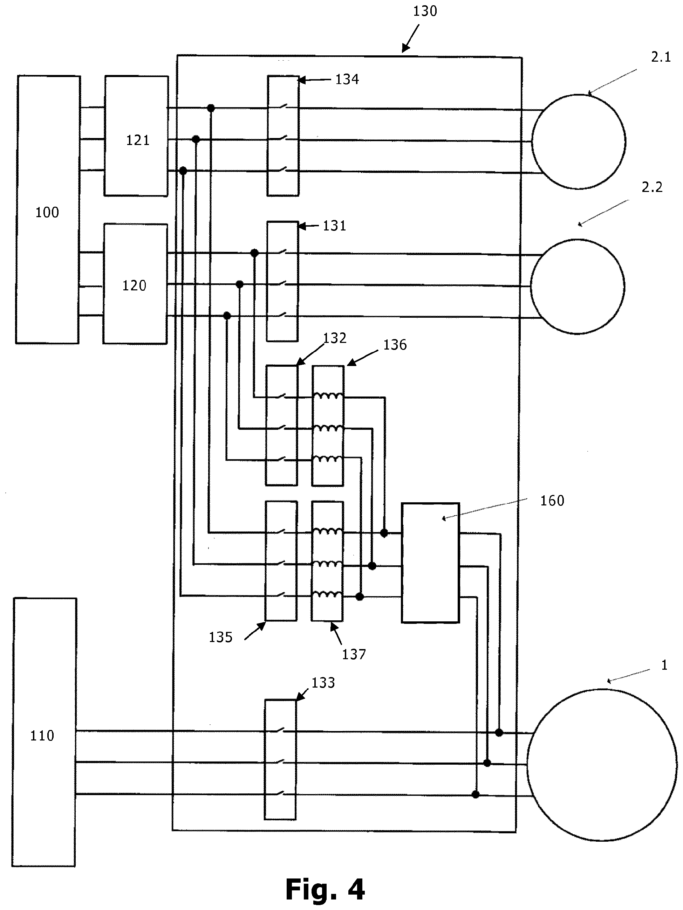

Fig. 4 zeigt einen elektrischen Schaltplan gemäß der erfindungsgemäßen Ausführungsform des drehzahländerbaren Antriebssystems nach Fig. 1. Es weist das elektrische Versorgungsnetz 100, zwei Frequenzumrichter 120, 121 und deren zugeordnete elektrische Regelmaschinen 2.1, 2.2 auf. Das Spannungsniveau des elektrischen Versorgungsnetzes 100 richtet sich nach der geforderten Nennleistung der elektrischen Regelmaschinen 2.1, 2.2 und deren Anzahl und der benötigten Startleistung, die das drehzahländerbare Antriebssystem in der elektrischen Antriebsmaschine 1 während des Startvorgangs realisieren muss. Bevorzugte Bemessungsspannungen der Frequenzumrichter 120, 121 und der Regelmaschinen 2.1, 2.2 bewegen sich zwischen 400V bis 13,8KV. Ferner weist das drehzahländerbare Antriebssystem das elektrische Versorgungsnetz 110 auf, das über die Umschaltvorrichtung 130 mit der elektrischen Antriebsmaschine 1 gekoppelt oder koppelbar ist. Das benötigte Spannungsniveau des elektrischen Versorgungsnetzes 110 richtet sich nach der geforderten Nennleistung der elektrischen Antriebsmaschine 1 und den vorhandenen verfügbaren Spannungsversorgungen 100, 110. Bevorzugte Bemessungsspannungen der elektrischen Antriebsmaschine 1 bewegen sich im Mittelspannungsbereich zwischen 1KV bis 50KV. Die zwei Frequenzumrichter 120, 121 dienen zur Variierung des Spannungsniveaus und der Frequenz aus dem elektrischen Versorgungsnetz 100. Der erste Frequenzumrichter 120 erlaubt in Abhängigkeit der Umschaltvorrichtung 130 den drehzahlgeregelten Betrieb der zweiten elektrischen Regelmaschine 2.2 oder der elektrischen Antriebsmaschine 1. Der zweite Frequenzumrichter 121 erlaubt in Abhängigkeit der Umschaltvorrichtung 130 den drehzahlgeregelten Betrieb der ersten elektrischen Regelmaschine 2.1 oder der elektrischen Antriebsmaschine 1. Die Umschaltvorrichtung 130 weist fünf Schaltvorrichtung 131, 132, 133, 134, 135, zwei elektrische Koppelelemente 136, 137 und die dazugehörigen elektrischen Verkabelungen und Anschlussmöglichkeiten auf. Die erste, dritte und vierte Schaltvorrichtung 131, 133, 134 können in Abhängigkeit der Anwendung auch außerhalb der Umschaltvorrichtung 130 realisiert und bereitgestellt werden. Eine übergeordnete Ansteuerung und Verriegelung der einzelnen Schaltvorrichtungen 131, 132, 133, 134, 135 ist durch die Umschaltvorrichtung 130 und deren Steuereinheit 150 (in Fig. 4 nicht dargestellt) gewährleistet. Innerhalb der Umschaltvorrichtung 130 können Elemente (in den Zeichnungen nicht dargestellt) integriert werden, die dem Schutz von elektrischen Komponenten und Kabeln dienen und diese Bauteile vor Über- oder Unterschreitungen der zulässigen Schwellwerte in Strom und Spannung schützen. Die Koppelelemente 136, 137, die vorzugsweise als Induktivitäten ausgeführt sind, erlauben es, die beiden Frequenzumrichter 120, 121 elektrisch zu koppeln. Die Notwendigkeit und Ausführung der Koppelelemente 136, 137 wird maßgeblich durch Art, Typ und das Schaltverhalten der fünf Schaltvorrichtungen 131, 132, 133, 134, 135 (sogenannte Leistungshalbleiter) der Frequenzumrichter 120, 121 definiert.

Innerhalb des Startvorgangs werden die beiden elektrischen Frequenzumrichter 120, 121 mittels der Umschaltvorrichtung 130 elektrisch gekoppelt und in einer Parallelschaltung genutzt, um die elektrische Antriebsmaschine 1 aufzustarten.

Innerhalb der Umschaltvorrichtung 130 wird zu diesem Zweck die erste und vierte elektrische Schaltvorrichtung 131, 134 mit einem identischen Ansteuerzustand beaufschlagt, um eine elektrische Trennung oder Verbindung zwischen den elektrischen Regelmaschinen 2.1, 2.2 und den jeweils zugeordneten Frequenzumrichtern 120, 121 zu ermöglichen. Die zweite und fünfte Schaltvorrichtung 132, 135 wird mit einem identischen Ansteuerzustand beaufschlagt, um eine elektrische Trennung oder Verbindung (Parallelschaltung) zwischen den beiden Frequenzumrichtern 120, 121 und der Antriebsmaschine 1 zu ermöglichen.

Die in Fig. 4 gezeigte Ausführungsform des drehzahländerbaren Antriebssystems kommt vorzugsweise zum Einsatz, falls die Vorteile bezüglich Wirkungsgrad und Verfügbarkeit von zwei und mehr elektrischen Regelmaschinen 2.1, 2.2 mit einem rein elektrischen Aufstarten der Antriebsmaschine 1 ohne elektro-mechanische Entlastung über die Regelmaschinen 2.1, 2.2, erfolgen soll. In diesem Fall steht durch die Parallelschaltung von zwei Frequenzumrichtern 120, 121 eine höhere Nennleistung für die Ansteuerung der Antriebsmaschine 1 zur Verfügung. Des Weiteren erlaubt diese Ausführungsform einen symmetrischen Eingriff der Regelmaschinen auf das entsprechende Element des Planetengetriebes und erlaubt dadurch eine einfachere Ausführung der betroffenen Gleitlagerung für den Normalbetrieb. Der dauerhafte symmetrische Eingriff über die zwei drehzahlregelbaren Regelmaschinen 2.1, 2.2 wirkt sich hierbei positiv auf die Kosten und Verfügbarkeit der Anordnung aus.

**Bezugszeichenliste**

| | |
|---|---|
| 1 | Antriebsmaschine |
| 2.1 | erste Regelmaschine |
| 2.2 | zweite Regelmaschine |
| 3 | Abtriebsmaschine |
| 4 | Hohlrad |
| 5 | Planeten |
| 6 | Stirnradgetriebestufe |
| 7 | Sonnenrad |
| 9 | Getriebegehäuse |
| 10 | Planetenträger |
| 11 | Kupplungsvorrichtung |
| 12 | Kupplungselement |
| 17 | Getriebeeinheit |
| 18 | Getriebestufe |

| 19 | Bremseinheit |
|---|---|
| 100 | erstes elektrisches Versorgungsnetz |
| 110 | zweites elektrisches Versorgungsnetz |
| 120 | erster Frequenzumrichter |
| 121 | zweiter Frequenzumrichter |
| 130 | Umschaltvorrichtung |
| 131 | erste Schaltvorrichtung |
| 132 | zweite Schaltvorrichtung |
| 133 | dritte Schaltvorrichtung |
| 134 | vierte Schaltvorrichtung |
| 135 | fünfte Schaltvorrichtung |
| 136 | erstes elektrisches Koppelelement |
| 137 | zweites elektrisches Koppelelement |
| 140 | Entlastungseinrichtung |
| 150 | Steuereinheit |
| 160 | Transformator |

**Patentansprüche**

1. Drehzahländerbares Antriebssystem, welches folgendes aufweist:

- eine Abtriebsmaschine (3); und
- eine Antriebsmaschine (1), welche mittels einer Getriebeeinheit (17) mit der Abtriebsmaschine (3) mechanisch gekoppelt oder koppelbar ist;

**gekennzeichnet durch**

- mindestens zwei Regelmaschinen (2.1, 2.2), welche mechanisch mit der Getriebeeinheit (17) gekoppelt oder koppelbar und jeweils mittels einem von mindestens zwei Frequenzumrichtern (120, 121) betreibbar sind, wobei wenigstens einer der mindestens zwei Frequenzumrichter (120, 121) mittels einer Umschaltvorrichtung (130) mit der Antriebsmaschine (1) elektrisch verbunden oder verbindbar ist, und eine Verbindung der Antriebsmaschine (1) mit wenigstens einem elektrischen Versorgungsnetz (100, 110) mittels der Umschaltvorrichtung (130) zumindest temporär oder dauerhaft trennbar ist, um eine geregelte und/oder gesteuerte Drehzahländerung an der Antriebsmaschine (1) zu erzeugen, wobei die mindestens zwei Frequenzumrichter (120, 121) mittels der Umschaltvorrichtung (130) mit der Antriebsmaschine (1) elektrisch verbunden oder verbindbar sind, derart, dass die Verbindung der Antriebsmaschine (1) mit dem wenigstens einen elektrischen Versorgungsnetz (100, 110) zumindest temporär oder dauerhaft trennbar ist, um eine geregelte und/oder gesteuerte Drehzahländerung an der Antriebsmaschine (1) zu erzeugen, wobei die Umschaltvorrichtung (130) mindestens fünf Schaltvorrichtungen (131, 132, 133, 134, 135) aufweist, welche ausgebildet sind, die mindestens zwei Frequenzumrichter (120, 121) mit jeweils den mindestens zwei Regelmaschinen (2.1, 2.2) und/oder der Antriebsmaschine (1) und/oder die Antriebsmaschine (1) mit wenigstens einem der elektrischen Versorgungsnetze (100, 110) elektrisch zu verbinden oder zu trennen; und/oder wobei die Umschaltvorrichtung (130) mindestens zwei Koppelelemente (136, 137) aufweist, welche ausgebildet sind, die mindestens zwei Frequenzumrichter (120, 121) elektrisch zu koppeln..

2. Drehzahländerbares Antriebssystem nach Anspruch 1, das eine Ansteuervorrichtung aufweist, welche ausgebildet ist, die Abtriebsmaschine (3) mittels einer Bypassvorrichtung in einen Zustand mit reduzierter Last zu versetzen.

3. Drehzahländerbares Antriebssystem nach einem der Ansprüche 1 oder 2, wobei eine mechanische Kopplung der Antriebsmaschine (1) und einer Getriebeeinheit (17) mittels eines Kupplungselements (12), insbesondere mittels eines mechanischen oder hydrodynamischen Kupplungselements (12), trennbar ist.

4. Drehzahländerbares Antriebssystem nach einem der Ansprüche 1 bis 3, wobei die jeweiligen mechanischen Kopplungen der mindestens zwei Regelmaschinen (2.1, 2.2) und der Getriebeeinheit (17) mittels jeweils eines Kupplungselements (11), insbesondere mittels eines mechanischen oder hydrodynamischen Kupplungselements (11), trennbar sind.

5. Drehzahländerbares Antriebssystem nach einem der Ansprüche 1 bis 4, wobei die Umschaltvorrichtung (130) einen Transformator (160) aufweist.

6. Verfahren zum Aufstarten und/oder Betreiben eines drehzahländerbaren Antriebssystems nach den Ansprüchen 1 bis 5, welches zumindest die folgenden Schritte aufweist:

i) Trennen aller elektrischen Verbindungen, welche mittels mindestens drei eine Umschaltvorrichtung (130) aufweisenden Schaltvorrichtungen (131, 132, 133) herstellbar sind;
ii) elektrisches Verbinden wenigstens eines (120) von mindestens zwei Frequenzumrichtern (120, 121) mit einer Antriebsmaschine (1) durch Schalten einer zugeordneten (132) der mindestens drei Schaltvorrichtungen (131, 132, 133);
iii) Einprägen und/oder Ansteuern einer geregelten und/oder gesteuerten Drehzahländerung an der Antriebsmaschine (1) mittels wenigstens eines (120) der mindestens zwei Frequenzumrichter (120, 121) an der Antriebsmaschine (1);
iv) nach Erreichen einer vorgegebenen Drehzahl der Antriebsmaschine (1), Trennen aller elektrischen Verbindungen, welche mittels mindestens drei eine Umschaltvorrichtung (130) aufweisenden Schaltvorrichtungen (131, 132, 133) herstellbar sind; und
v) elektrisches Verbinden wenigstens eines (120) der mindestens zwei Frequenzumrichter (120, 121) mit einer jeweiligen Regelmaschine (2.2) durch Schalten einer zugeordneten (131) der mindestens drei Schaltvorrichtungen (131, 132, 133) sowie elektrisches Verbinden der Antriebsmaschine (1) mit einem elektrischen Versorgungsnetz (110) durch Schalten einer zugeordneten (133) der mindestens drei Schaltvorrichtungen (131, 132, 133).

7. Verfahren zum Aufstarten und/oder Betreiben eines drehzahländerbaren Antriebssystems nach den Ansprüchen 1 bis 5, welches zumindest die folgenden Schritte aufweist:

i) Trennen aller elektrischen Verbindungen, welche mittels mindestens fünf eine Umschaltvorrichtung (130) aufweisenden Schaltvorrichtungen (131, 132, 133, 134, 135) herstellbar sind;
ii) elektrisches Verbinden wenigstens eines (120) von mindestens zwei Frequenzumrichtern (120, 121) und/oder eines (121) der mindestens zwei Frequenzumrichter (120, 121) mit einer Antriebsmaschine (1) durch Schalten einer zugeordneten Schaltvorrichtung (132) und/oder (135) der mindestens fünf Schaltvorrichtungen (131, 132, 133, 134, 135);
iii) Einprägen und/oder Ansteuern einer geregelten und/oder gesteuerten Drehzahländerung an der Antriebsmaschine (1) mittels mindestens zwei Frequenzumrichtern (120, 121) und/oder eines (121) der mindestens zwei Frequenzumrichter (120, 121) an der Antriebsmaschine (1);
iv) nach Erreichen einer vorgegebenen Drehzahl der Antriebsmaschine (1), Trennen aller elektrischen Verbindungen, welche mittels mindestens fünf eine Umschaltvorrichtung (130) aufweisenden Schaltvorrichtungen (131, 132, 133, 134, 135) herstellbar sind; und
v) elektrisches Verbinden wenigstens eines (120) der mindestens zwei Frequenzumrichter (120, 121) mit einer jeweiligen Regelmaschine (2.2) und/oder eines (121) der mindestens zwei Frequenzumrichter (120, 121) mit einer anderen Regelmaschine (2.1) durch Schalten einer zugeordneten Schaltvorrichtung (131) und/oder (134) der mindestens fünf Schaltvorrichtungen (131, 132, 133, 134, 135) sowie elektrisches Verbinden der Antriebsmaschine (1) mit einem elektrischen Versorgungsnetz (110) durch Schalten einer zugeordneten (133) der mindestens fünf Schaltvorrichtungen (131, 132, 133, 134, 135).

8. Verfahren nach Anspruch 6 oder 7, wobei die Lastkennlinie der Abtriebsmaschine (3) vor dem Aufstartvorgang durch Ansteuerung mittels einer Bypassvorrichtung (140) in einen Zustand mit reduzierter Last versetzen wird und nach dem elektrischen Verbinden der Antriebsmaschine (1) mit dem elektrischen Versorgungsnetz (110) die Bypassvorrichtung (140) die Entlastung aufhebt und zur ursprünglichen Lastkennlinie zurückschaltet.

9. Verfahren nach Anspruch 6 oder 7, wobei eine mechanische Kopplung der Antriebsmaschine (1) und einer Getriebeeinheit (17) vor dem Aufstartvorgang durch Ansteuerung eines Kupplungselements (12) getrennt wird und nach dem elektrischen Verbinden der Antriebsmaschine (1) mit dem elektrischen Versorgungsnetz (110) diese mechanische Kopplung der Antriebsmaschine (1) und der Getriebeeinheit (17) durch Ansteuerung des Kupplungselements (12) wieder verbunden wird.

**Claims**

1. A variable speed drive system, comprising the following:

   - a driven machine (3); and
   - a driver machine (1) which is or can be mechanically coupled to the driven machine (3) via a transmission unit (17);

   **characterized by**

   - at least two control machines (2.1, 2.2) which are or can be mechanically coupled to the transmission unit (17) and respectively operable by one of at least two frequency converters (120, 121),
   wherein at least one of the at least two frequency converters (120, 121) is electrically connected or connectable to the driver machine (1) via a changeover device (130), and
   a connection of the driver machine (1) to at least one electrical supply network (100, 110) can be at least temporarily or permanently disconnected by the changeover device (130) in order to generate a regulated and/or controlled change of speed on the driver machine (1),
   wherein the at least two frequency converters (120, 121) are electrically connected or connectable to the driver machine (1) by the changeover device (130) such that the connection of the driver machine (1) to the at least one electrical supply network (100, 110) can be at least temporarily or permanently disconnected in order to generate a regulated and/or controlled change of speed on the driver machine (1),
   wherein the changeover device (130) comprises at least five switching devices (131, 132, 133, 134, 135) configured to electrically connect or disconnect the respective at least two frequency converters (120, 121) to the at least two control machines (2.1, 2.2) and/or the driver machine (1), and/or the driver machine (1) to the at least one electrical supply network (100, 110); and/or wherein the changeover device (130) comprises at least two coupler elements (136, 137) configured to electrically couple the at least two frequency converters (120, 121).

2. The variable speed drive system according to claim 1,
   which comprises a control device configured to put the driven machine (3) into a reduced load state via a bypass device.

3. The variable speed drive system according to one of claims 1 or 2,
   wherein a mechanical coupling of the driver machine (1) and a transmission unit (17) can be disconnected by a coupling element (12), particularly by a mechanical or hydrodynamic coupling element (12).

4. The variable speed drive system according to one of claims 1 to 3,
   wherein the respective mechanical couplings of the at least two control machines (2.1, 2.2) and the transmission unit (17) can be disconnected by a respective coupling element (11), particularly by a mechanical or hydrodynamic coupling element (11).

5. The variable speed drive system according to one of claims 1 to 4,
   wherein the changeover device (130) comprises a transformer (160).

6. A method of starting and/or operating a variable speed drive system according to one of claims 1 to 5, which at least comprises the following steps:

   i) disconnecting all the electrical connections able to be produced by the changeover device (130) comprising the at least five switching devices (131, 132, 133);
   ii) electrically connecting at least one (120) of the at least two frequency converters (120, 121) to a driver machine (1) by switching an associated one (132) of the at least three switching devices (131, 132, 133);
   iii) imposing and/or controlling a regulated and/or controlled change of speed on the driver machine (1) via at least one (120) of the at least two frequency converters (120, 121) on the driver machine (1);
   iv) after a predetermined rotational speed of the driver machine (1) being reached, disconnecting all the electrical connections able to be produced by the changeover device (130) comprising the at least five switching devices (131, 132, 133); and
   v) electrically connecting at least one (120) of the at least two frequency converters (120, 121) to a respective control machine (2.2) by switching an associated one (131) of the at least three switching devices (131, 132, 133) as well as electrically connecting the driver machine (1) to an electrical supply network (110) by switching an associated one (133) of the at least three switching devices (131, 132, 133).

7. A method of starting and/or operating a variable speed drive system according to one of claims 1 to 5, which at least comprises the following steps:

i) disconnecting all the electrical connections able to be produced by the changeover device (130) comprising the at least five switching devices (131, 132, 133, 134, 135);

ii) electrically connecting at least one (120) of at least two frequency converters (120, 121) and/or one (121) of the at least two frequency converters (120, 121) to a driver machine (1) by switching an associated switching device (132) and/or (135) of the at least five switching devices (131, 132, 133, 134, 135);

iii) imposing and/or controlling a regulated and/or controlled change of speed on the driver machine (1) via at least two frequency converters (120, 121) and/or one (121) of the at least two frequency converters (120, 121) on the driver machine (1);

iv) after a predetermined rotational speed of the driver machine (1) being reached, disconnecting all the electrical connections able to be produced by the changeover device (130) comprising the at least five switching devices (131, 132, 133, 134, 135); and

v) electrically connecting at least one (120) of the at least two frequency converters (120, 121) to a respective control machine (2.2) and/or one (121) of the at least two frequency converters (120, 121) to another control machine (2.1) by switching an associated switching device (131) and/or (134) of the at least five switching devices (131, 132, 133, 134, 135) as well as electrically connecting the driver machine (1) to an electrical supply network (110) by switching an associated one (133) of the at least five switching devices (131, 132, 133, 134, 135).

8. The method according to claim 6 or 7, wherein the load characteristic of the driven machine (3) is put into a reduced load state prior to the start-up process by means of a bypass device (140) control, and after the electrical connection of the driver machine (1) to the electrical supply network (110), the bypass device (140) suspends the reduction and switches back to the original load characteristic.

9. The method according to claim 6 or 7, wherein a mechanical coupling of the driver machine (1) and a transmission unit (17) is disconnected prior to the start-up process by means of a coupling element (12) control, and after the electrical connection of the driver machine (1) to the electrical supply network (110), this mechanical coupling of the driver machine (1) and the transmission unit (17) is reconnected by control of the coupling element (12).

**Revendications**

1. Système d'entraînement à vitesse de rotation variable, comprenant :

- une machine menée (3) ; et
- une machine menante (1) qui est couplée ou peut être couplée mécaniquement à la machine menée (3) au moyen d'une unité de transmission (17) ;

**caractérisé par**

- au moins deux machines de régulation (2.1, 2.2) qui sont couplées ou peuvent être couplées mécaniquement à l'unité de transmission (17) et qui peuvent chacune être actionnées au moyen de l'un parmi au moins deux convertisseurs de fréquence (120, 121),

dans lequel

au moins l'un desdits au moins deux convertisseurs de fréquence (120, 121) est connecté ou peut être connecté électriquement à la machine menante (1) au moyen d'un dispositif d'inversion (130), et une connexion de la machine menante (1) à au moins un réseau d'alimentation électrique (100, 110) peut être déconnectée au moins temporairement ou de façon permanente au moyen du dispositif d'inversion (130) afin d'engendrer une variation de vitesse de rotation régulée et/ou commandée sur la machine menante (1), lesdits au moins deux convertisseurs de fréquence (120, 121) sont connectés ou peuvent être connectés électriquement à la machine menante (1) au moyen du dispositif d'inversion (130), de telle sorte que la connexion de la machine menante (1) audit au moins un réseau d'alimentation électrique (100, 110) peut être déconnectée au moins temporairement ou de façon permanente afin d'engendrer une variation de vitesse de rotation régulée et/ou commandée sur la machine menante (1),

le dispositif d'inversion (130) présente au moins cinq dispositifs commutateurs (131, 132, 133, 134, 135) qui sont réalisés pour connecter ou déconnecter électriquement lesdits au moins deux convertisseurs de fréquence (120, 121) à ou de chacune desdites au moins deux machines de régulation (2.1, 2.2) et/ou à ou de la machine menante (1), et/ou la machine menante (1) à ou de l'un au moins des réseaux d'alimentation électrique (100, 110) ;

et/ou le dispositif d'inversion (130) comprend au moins deux éléments de couplage (136, 137) qui sont réalisés pour coupler électriquement lesdits au moins deux convertisseurs de fréquence (120, 121).

2. Système d'entraînement à vitesse de rotation variable selon la revendication 1, comprenant un dispositif de pilotage qui est réalisé pour mettre la machine menée (3) dans un état à charge réduite au moyen d'un dispositif formant by-pass.

3. Système d'entraînement à vitesse de rotation variable selon l'une des revendications 1 ou 2, dans lequel
un couplage mécanique de la machine menante (1) et d'une unité de transmission (17) peut être séparé au moyen d'un élément de couplage (12), en particulier au moyen d'un élément de couplage mécanique ou hydrodynamique (12).

4. Système d'entraînement à vitesse de rotation variable selon l'une des revendications 1 à 3, dans lequel
les couplages mécaniques respectifs desdites au moins deux machines de régulation (2.1, 2.2) et de l'unité de transmission (17) peuvent être séparés au moyen d'un élément de couplage respectif (11), en particulier au moyen d'un élément de couplage mécanique ou hydrodynamique (11).

5. Système d'entraînement à vitesse de rotation variable selon l'une des revendications 1 à 4, dans lequel
le dispositif d'inversion (130) comprend un transformateur (160).

6. Procédé de démarrage et/ou de fonctionnement d'un système d'entraînement à vitesse de rotation variable selon l'une des revendications 1 à 5, comprenant au moins les étapes suivantes consistant à :

   i) séparer toutes les connexions électriques qui peuvent être établies au moyen du dispositif d'inversion (130) comprenant au moins cinq dispositifs commutateurs (131, 132, 133) ;
   ii) connecter par voie électrique l'un au moins (120) d'au moins deux convertisseurs de fréquence (120, 121) à une machine menante (1) par commutation d'un dispositif commutateur associé (132) parmi lesdits au moins trois dispositifs commutateurs (131, 132, 133) ;
   iii) imposer et/ou piloter une modification régulée et/ou commandée de la vitesse de rotation au niveau de la machine menante (1) au moyen de l'un au moins (120) desdits au moins deux convertisseurs de fréquence (120, 121) au niveau de la machine menante (1) ;
   iv) une fois qu'une vitesse de rotation prédéterminée de la machine menante (1) est atteinte, séparer toutes les connexions électriques qui peuvent être établies au moyen du dispositif d'inversion (130) comprenant au moins cinq dispositifs commutateurs (131, 132, 133) ; et
   v) connecter par voie électrique l'un au moins (120) desdits au moins deux convertisseurs de fréquence (120, 121) à une machine de régulation respective (2.2) par commutation d'un dispositif commutateur associé (131) parmi lesdits au moins trois dispositifs commutateurs (131, 132, 133), et connecter par voie électrique la machine menante (1) à un réseau d'alimentation électrique (110) par commutation d'un dispositif commutateur associé (133) parmi lesdits au moins trois dispositifs commutateurs (131, 132, 133).

7. Procédé de démarrage et/ou de fonctionnement d'un système d'entraînement à vitesse de rotation variable selon l'une des revendications 1 à 5, comprenant au moins les étapes suivantes consistant à :

   i) séparer toutes les connexions électriques qui peuvent être établies au moyen du dispositif d'inversion (130) comprenant au moins cinq dispositifs commutateurs (131, 132, 133, 134, 135);
   ii) connecter par voie électrique l'un au moins (120) d'au moins deux convertisseurs de fréquence (120, 121) et/ou l'un (121) desdits au moins deux convertisseurs de fréquence (120, 121) à une machine menante (1) par commutation d'un dispositif commutateur associé (132) et/ou (135) parmi lesdits au moins cinq dispositifs commutateurs (131, 132, 133, 134, 135) ;

iii) imposer et/ou piloter une modification régulée et/ou commandée de la vitesse de rotation au niveau de la machine menante (1) au moyen d'au moins deux convertisseurs de fréquence (120, 121) et/ou de l'un (121) desdits au moins deux convertisseurs de fréquence (120, 121) au niveau de la machine menante (1) ;

iv) une fois qu'une vitesse de rotation prédéterminée de la machine menante (1) est atteinte, séparer toutes les connexions électriques qui peuvent être établies au moyen du dispositif d'inversion (130) comprenant au moins cinq dispositifs commutateurs (131, 132, 133, 134, 135) ; et

v) connecter par voie électrique l'un au moins (120) desdits au moins deux convertisseurs de fréquence (120, 121) à une machine de régulation respective (2.2) et/ou l'un (121) desdits au moins deux convertisseurs de fréquence (120, 121) à une autre machine de régulation (2.1) par commutation d'un dispositif commutateur associé (131) et/ou (134) parmi lesdits au moins cinq dispositifs commutateurs (131, 132, 133, 134, 135), et connecter par voie électrique la machine menante (1) à un réseau d'alimentation électrique (110) par commutation d'un dispositif commutateur associé (133) parmi lesdits au moins cinq dispositifs commutateurs (131, 132, 133, 134, 135).

8. Procédé selon la revendication 6 ou 7,
dans lequel
la courbe caractéristique de charge de la machine menée (3) est mise dans un état à charge réduite avant l'opération de démarrage par pilotage d'au moyen d'un dispositif formant by-pass (140), et après la connexion électrique de la machine menante (1) au réseau d'alimentation électrique (110) le dispositif formant by-pass (140) annule la décharge et revient à la courbe caractéristique de charge initiale.

9. Procédé selon la revendication 6 ou 7,
dans lequel
un couplage mécanique de la machine menante (1) et d'une unité de transmission (17) est séparé avant l'opération de démarrage par pilotage d'un élément de couplage (12), et après la connexion électrique de la machine menante (1) au réseau d'alimentation électrique (110), ce couplage mécanique de la machine menante (1) et de l'unité de transmission (17) est de nouveau relié par pilotage de l'élément de couplage (12).

**Fig. 1**

**Fig. 2**

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014169302 A1

- WO 2011000008 A1